# EUROPEAN PATENT SPECIFICATION

(11) **EP 3 354 569 B1**
(45) Date of publication and mention of the grant of the patent: **08.07.2020**
(21) Application number: 17203317.7
(22) Date of filing: 23.11.2017
(51) Int. Cl.: B64D 11/00

(54) **OVERHEAD BIN WITH TWO SUBSTANTIALLY RIGID SHELVES**
GEPÄCKFACH MIT ZWEI IM WESENTLICHEN STARREN REGALEN
COMPARTIMENT À BAGAGES SUPÉRIEUR COMPORTANT DEUX ÉTAGÈRES SENSIBLEMENT RIGIDES

(30) Priority: 30.01.2017 US 201715419367
(43) Date of publication of application: 01.08.2018
(73) Proprietor: The Boeing Company, Chicago, IL 60606-2016 (US)
(72) Inventor: SANKRITHI, Mithra M., Chicago, IL 60606-1596 (US); SIMMS, Richard K., Chicago, IL 60606-1596 (US)
(74) Representative: Lissandrini, Marco

(56) References cited:
- EP-A2- 2 883 793
- WO-A1-2006/087183
- DE-A1-102013 021 108
- FR-A1- 2 908 383
- IT-B- 1 218 680
- US-A- 5 820 076
- US-A1- 2009 194 635

## Description

### BACKGROUND INFORMATION

### 1. Field:

The present disclosure relates generally to storage of items and, in particular, to overhead storage of items. Still more particularly, the present disclosure relates to an apparatus for storing items in an overhead stowage bin in an aircraft.

### 2. Background:

In commercial aviation, passengers may bring carryon items, such as luggage, into the passenger cabin. Passengers commonly bring roller bags into the passenger cabin. Luggage may be stored within a passenger cabin in storage areas. Storage areas in the passenger cabin include areas on the floor underneath the passenger seats and overhead compartments.

An overhead compartment may receive luggage when the overhead compartment is in an open state or open position. After luggage is placed into an overhead compartment, the overhead compartment may be placed into a closed state.

Many designs for overhead compartments exist. Some overhead compartment designs include a stationary luggage bin and a rotating door. Other overhead compartment designs include a rotating luggage bin. Yet other overhead compartment designs feature a luggage bin which is lowered into the passenger cabin.

With rising flight costs, passengers have decreased interest in checking their luggage to store below the cabin. Passengers are bringing a greater number of roller bags into the passenger cabin. Conventional overhead compartments have limited storage space.

Currently, overhead compartment space is not sufficient to accommodate a rolling bag per passenger on an aircraft. When overhead compartment space is full, rolling bags and other items that cannot be accommodated under passenger seats will be checked at the gate or once the passenger is on the aircraft. Checking luggage at the gate or on the aircraft may add undesirable time prior to take-off. Additionally, requiring a passenger to check a piece of luggage may reduce the passenger's satisfaction with the flying experience.

Overhead compartments according to the state of the art are also known from document EP2883793.

Therefore, it would be desirable to have a method and apparatus that takes into account at least some of the issues discussed above, as well as other possible issues.

### SUMMARY

In one illustrative embodiment, an overhead bin of an aircraft is presented, according to claim 1.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in which an illustrative embodiment may be implemented;
**Figure 2** is an illustration of a block diagram of a vehicle environment in accordance with an illustrative embodiment;
**Figure 3** is an illustration of an isometric cross-sectional view of overhead bins installed in a passenger cabin in an aircraft in accordance with an illustrative embodiment;
**Figure 4** is an illustration of a cross-sectional view of a first implementation of overhead bins installed in a passenger cabin in an aircraft in accordance with an illustrative embodiment;
**Figure 5** is an illustration of a cross-sectional view of another implementation of overhead bins installed in a passenger cabin in an aircraft in accordance with an illustrative embodiment;
**Figure 6** is an illustration of a cross-sectional view of another implementation of overhead bins installed in a passenger cabin in an aircraft in accordance with an illustrative embodiment;
**Figure 7** is an illustration of a cross-sectional view of another implementation of overhead bins installed in a passenger cabin in an aircraft in accordance with an illustrative embodiment;
**Figure 8** is an illustration of a cross-sectional view of another implementation of overhead bins installed in a passenger cabin in an aircraft in accordance with an illustrative embodiment;
**Figure 9** is an illustration of a cross-sectional view of another implementation of overhead bins installed in a passenger cabin in an aircraft in accordance with an illustrative embodiment;
**Figure 10** is an illustration of a cross-sectional view of another implementation of overhead bins installed in a passenger cabin in an aircraft in accordance with an illustrative embodiment;
**Figure 11** is an illustration of a cross-sectional view of another implementation of overhead bins installed in a passenger cabin in an aircraft in accordance with an illustrative embodiment;
**Figure 12** is an illustration of a block diagram of an aircraft manufacturing and service method in accordance with an illustrative embodiment; and
**Figure 13** is an illustration of a block diagram of an aircraft in which an illustrative embodiment may be implemented.

### DETAILED DESCRIPTION

The different illustrative embodiments recognize and take into account one or more different considerations. For example, the illustrative embodiments recognize and take into account that in the art of commercial airplanes that serve as airliners, there are several desirable conditions for overhead stowage bins in a passenger cabin. As an example, the illustrative embodiments recognize and take into account that it is desirable for overhead stowage bins to be spacious enough to accommodate at least one roller-bag (or equivalent size bag) per passenger. The illustrative embodiments also recognize and take into account that it is desirable for overhead stowage bins to be designed to be easily accessible and usable by passengers and crew with different strength, height and reach capabilities.

The illustrative embodiments also recognize and take into account that it is desirable for overhead stowage bins to be located with bottom surface sufficiently high to allow comfort for passengers seated under the bin. The illustrative embodiments further recognize and take into account that at least 1,473 to 1,575 metres (i.e 58 to 62 inches, 1 inch being about 0,0254 metres) above the cabin floor may be considered sufficiently high to allow comfort for passengers beneath the bin.

The illustrative embodiments recognize and take into account that it is desirable for overhead stowage bins to be aesthetically pleasing in conjunction with the cabin ceiling architecture and lighting architecture. The illustrative embodiments also recognize and take into account that it is desirable for overhead stowage bins to be capable of accommodating Passenger Service Units (PSUs) for passenger-usable reading lights and personal air outlets, as well as attendant call buttons and safety placards/lights (e.g., "fasten seat belts").

The illustrative embodiments recognize and take into account that it is desirable to reduce weight in aircraft. Accordingly, the illustrative embodiments recognize and take into account that it is desirable for overhead stowage bins to be lighter weight than prior-art bins, such as translating or pivot bins.

The illustrative embodiments recognize and take into account that it is also desirable for overhead stowage bins to have a reduced cost including recurring and nonrecurring costs. The illustrative embodiments are intended to provide a better overall balanced achievement of the objectives described herein than any preceding solutions, especially for twin-aisle aircraft.

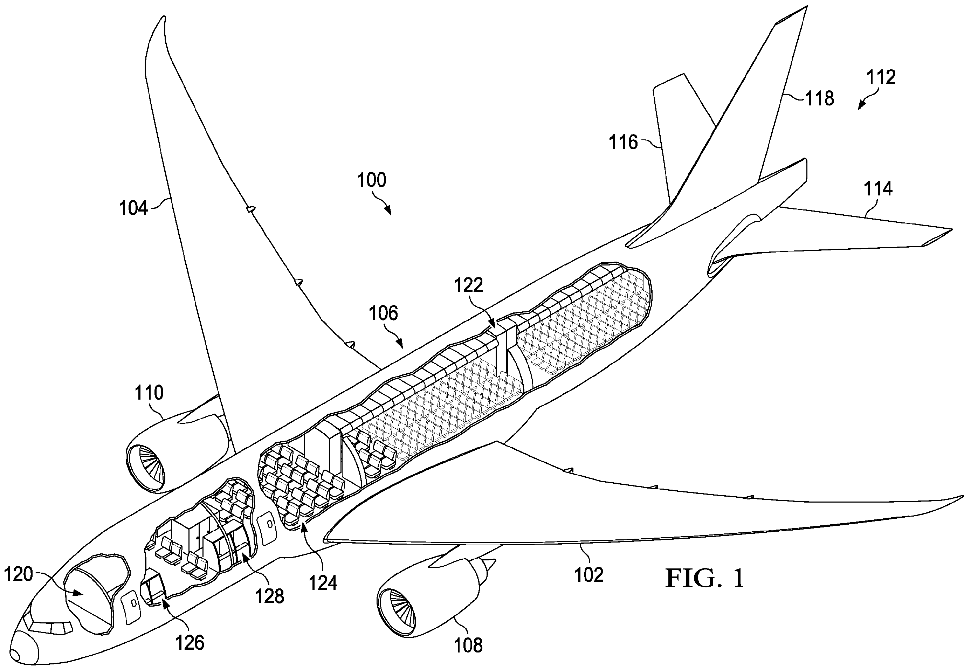

With reference now to the figures, and in particular, with reference to **Figure 1**, an illustration of an aircraft is depicted in accordance with an illustrative embodiment. In this illustrative example, aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114**, horizontal stabilizer **116**, and vertical stabilizer **118** are attached to tail section **112** of body **106.**

Body **106** also has cockpit **120** and passenger cabin **122.** In this example, passenger cabin **122** may include passenger seating in seating area **124.** Passenger seating may include a number of aircraft seats. As used herein, a "number of" items means one or more items. For example, a number of aircraft seats means one or more aircraft seats.

Further, seating area **124** in passenger cabin **122** may also include storage areas, such as a number of overhead compartments. Passenger cabin **122** also may include lavatory **126** and galley area **128.** These two areas may be partitioned or separated from seating area **124** by a partitioning structure such as, for example, without limitation, a wall.

Protective removable covers, in accordance with an illustrative embodiment, may be used in aircraft **100** during manufacturing. For example, protective removable covers, in accordance with an illustrative embodiment, may be used to protect seats or other monuments in at least one of seating area **124**, lavatory **126**, or galley area **128.**

As used herein, the phrase "at least one of," when used with a list of items, means different combinations of one or more of the listed items may be used, and only one of each item in the list may be needed. In other words, "at least one of" means any combination of items and number of items may be used from the list but not all of the items in the list are required. The item may be a particular object, a thing, or a category.

For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A, one of item B, and ten of item C; four of item B and seven of item C; or other suitable combinations.

This illustration of aircraft **100** is provided for purposes of illustrating one environment in which the different illustrative embodiments may be implemented. The illustration of aircraft **100** in **Figure 1** is not meant to imply architectural limitations as to the manner in which different illustrative embodiments may be implemented. For example, aircraft **100** is shown as a commercial passenger aircraft. The different illustrative embodiments may be applied to other types of aircraft, such as private passenger aircraft, a rotorcraft, and other suitable types of aircraft. Also, other areas may be present in addition to seating area **124**, lavatory **126**, and galley area **128**. Other areas may include, for example, without limitation, closets, storage areas, lounges, and other suitable areas for passenger seating. As another example, airplane seats within seating area **124** may be arranged differently from the depicted example. In other illustrative embodiments, some seats may be grouped into sets of single seats instead of three seats or pairs of seats as illustrated in seating area **124**.

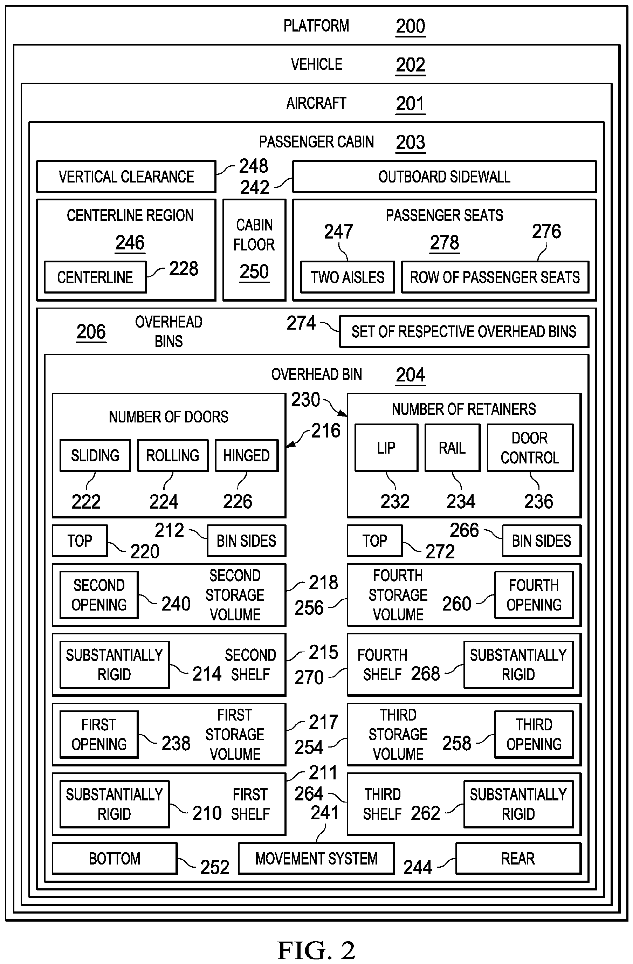

Turning now to **Figure 2**, an illustration of a block diagram of a vehicle environment is depicted in accordance with an illustrative embodiment. In **Figure 2**, platform **200** may be one implementation of aircraft **100** in **Figure 1**.

As depicted, platform **200** has passenger cabin **203** with overhead bin **204**. Overhead bin **204** is one of overhead bins **206**. In some illustrative examples, platform **200** is aircraft **201**.

Overhead bin **204** of aircraft **201** includes substantially rigid **210** first shelf **211**, bin sides **212**, substantially rigid **214** second shelf **215**, and number of doors **216**. Bin sides **212** are connected to and extending upward from sides of first shelf **211.** Substantially rigid **214** second shelf **215** is above first shelf **211**. Bin sides **212** are connected to and extending upward from sides of second shelf **215**. Number of doors **216** is configured to provide access to first shelf **211** and second shelf **215** from a first direction. Second shelf **215** is longer than first shelf **211**.

First shelf **211** is substantially rigid **210** based on at least one of material or design. For example, first shelf **211** does not move substantially relative to the remainder of overhead bin **204**. First shelf **211** is fixed relative to the remainder of overhead bin **204**.

Second shelf **215** is substantially rigid **214** based on at least one of material or design. For example, second shelf **215** does not move substantially relative to the remainder of overhead bin **204**. Second shelf **215** is fixed relative to the remainder of overhead bin **204**.

First storage volume **217** is a volume between first shelf **211** and second shelf **215**. Second storage volume **218** is a volume between second shelf **215** and top **220** of overhead bin **204**. In some illustrative examples, the volume between first shelf **211** and second shelf **215** is configured to receive a first number of roller bags, and the volume between second shelf **215** and top **220** of overhead bin **204** is configured to receive a second number of roller bags.

Roller bags are manufactured in a variety of sizes. Each airline sets a maximum allowable size for checked and carryon items. Roller bag dimensions are described as length X width X depth. The length is the distance from the handle to the wheels. The width is across the zippered face. The depth is from the zippered face towards the back of the luggage. Although it is not standardized, a depth of 0,23 metres (i.e nine inches) is considered a maximum depth for carry-ons for many airlines.

When first storage volume **217** is configured to receive a first number of roller bags, first storage volume **217** has a height between first shelf **211** and second shelf **215** of at least 0,23 metres (i.e nine inches). When second storage volume **218** is configured to receive a second number of roller bags, second storage volume **218** between second shelf **215** and top **220** is at least 0,23 metres (i.e. nine inches). A height of 0,23 metres (i.e nine inches) accommodates many carry-on roller bags in a flat longitudinal orientation or a flat transverse orientation.

In some illustrative examples, at least one of first storage volume **217** or second storage volume **218** is configured to accommodate roller bags in an on-edge orientation. An on-edge orientation is one of an on-edge transverse orientation or an on-edge longitudinal orientation. To accommodate a roller bag in an on-edge orientation, the height of the storage volume must be at least the width of the roller bag. Many airlines have a maximum width of 0,356 metres (i.e. fourteen inches) for carry-on bags.

When first storage volume **217** is configured to receive a first number of roller bags in an on-edge orientation, first storage volume **217** has a height between first shelf **211** and second shelf **215** of at least 0,356 metres (i.e. fourteen inches). When second storage volume **218** is configured to receive a second number of roller bags in an on-edge orientation, second storage volume **218** between second shelf **215** and top **220** is at least fourteen inches.

In some illustrative examples, roller bags may be stored in first storage volume **217** and second storage volume **218** in the same orientation. In other illustrative examples, roller bags may be stored in first storage volume **217** and second storage volume **218** in different orientations.

Number of doors **216** includes any desirable type of door. Number of doors **216** is selected from at least one of sliding **222**, rolling **224**, or hinged **226**. In some illustrative examples, number of doors **216** includes at least one rolling door. When number of doors **216** is rolling **224**, a portion of a respective door of number of doors **216** moves relative to the remainder of the respective door. When number of doors **216** is rolling **224**, number of doors **216** is at least one of flexible, a plurality of panels, or a plurality of slats. For example, number of doors **216** may be formed of a flexible metal that bends such that a door of number of doors **216** changes shape when moving.

In some illustrative examples, number of doors **216** includes at least one sliding door. When number of doors **216** is sliding **222,** number of doors **216** does not change length. Instead, number of doors **216** slides relative to the remainder of overhead bin **204.**

In some illustrative examples, number of doors **216** comprises a first hinged door configured to provide access to first shelf **211** and a second hinged door configured to provide access to second shelf **215.** When number of doors **216** is hinged **226**, number of doors **216** swings relative to the remainder of overhead bin **204.**

In some illustrative examples, first shelf **211** and second shelf **215** are substantially planar to a floor of passenger cabin **203.** In some illustrative examples, at least one of first shelf **211** or second shelf **215** slopes downward in an outward direction relative to centerline **228** of aircraft **201**. When at least one of first shelf **211** or second shelf **215** slopes downward in an outward direction, stowing items on the sloped shelf may be easier than stowing an item on a planar shelf. For example, when a shelf slopes downward in an outward direction relative to centerline **228**, an edge of the shelf is lower within passenger cabin **203** than a planar shelf. Having a lower edge reduces the work a passenger performs to stow an item. For example, a lower edge allows a passenger to lift the item a shorter distance.

In other illustrative examples, at least one of first shelf **211** or second shelf **215** slopes downward in an inward direction relative to centerline **228** of aircraft **201**. When at least one of first shelf **211** or second shelf **215** slopes downward in an inward direction relative to centerline **228**, the slope of the shelf aids in retaining items within overhead bin **204**.

In some illustrative examples, number of retainers **230** is associated with at least one of first shelf **211** or second shelf **215**, wherein number of retainers **230** is configured to discourage items from falling from overhead bin **204**. Number of retainers **230** takes any desirable form. Number of retainers **230** may be selected from at least one of lip **232**, rail **234**, or door control **236.** When number of retainers **230** takes the form of door control **236**, door control **236** may activate number of doors **216**, in addition to discouraging items from falling from overhead bin **204.** Door control **236** controls movement of number of doors **216**. Door control **236** may take any desirable mechanical or electrical form. The control means may include at least one of a button, a switch, a latch, a control pad, a touchless control sensor, or any other desirable means for controlling a bin door.

In one illustrative example, overhead bin **204** of aircraft **201** comprises first storage volume **217** between substantially rigid **210** first shelf **211** and substantially rigid **214** second shelf **215**, second storage volume **218** above first storage volume **217,** and a first door. First storage volume **217** has first opening **238.** Second storage volume **218** is between second shelf **215** and top **220** of overhead bin **204.** Second storage volume **218** has second opening **240.** First opening **238** and second opening **240** are accessed from a same side of aircraft **201.** The first door is moveably covering first opening **238.** In this example, number of doors **216** includes the first door.

In one example, overhead bin **204** further comprises a second door moveably covering second opening **240.** When the second door is present, the first door is hinged **226.** In other examples, a second door is not present. In these examples, the first door moveably covers second opening **240.**

In some illustrative examples, overhead bin **204** also includes movement system **241** associated with at least one of first shelf **211** or second shelf **215.** Movement system **241** is configured to reduce frictional resistance associated with bag loading and unloading to overhead bin **204.** In some illustrative examples, movement system **241** comprises at least one of a roller, a roller tray, a powered roller, a wheel, a low-friction shelf surface, a low-friction shelf liner, or a shelf surface incorporating a low-friction material. When placing an item onto first shelf **211** or second shelf **215**, movement of the item into overhead bin **204** may be aided by movement system **241.**

In some illustrative examples, overhead bin **204** is associated with outboard sidewall **242.** When overhead bin **204** is associated with outboard sidewall **242**, overhead bin **204** may be referred to as an outboard overhead bin. In these illustrative examples, rear **244** of overhead bin **204** is formed by outboard overhead bin.

In these illustrative examples, another overhead bin (not depicted) of overhead bins **206** is associated with outboard sidewall **242** on an opposite side of passenger cabin **203.** In these illustrative examples, none of overhead bins **206** are associated with centerline **228** of passenger cabin **203.**

In other illustrative examples, overhead bins **206** are positioned only in centerline region **246** of aircraft **201.** In these illustrative examples, none of overhead bins **206** are positioned on outboard sidewall **242.** When overhead bin **204** is positioned in centerline region **246**, overhead bin **204** is referred to as a centerline bin. Overhead bins **206** are positioned substantially between two aisles **247** of passenger cabin **203** of aircraft **201.**

When overhead bins **206** are positioned only in centerline region **246** of aircraft **201**, vertical clearance **248** between cabin floor **250** and bottom **252** of overhead bins **206** is at least 1,473 metres (i.e. 58 inches). Bottom **252** of overhead bins **206** may be formed by first shelf **211**, passenger support units, or other components closest to cabin floor **250.**

When overhead bins **206** are positioned only in centerline region **246**, overhead bin **204** further includes third storage volume **254** and fourth storage volume **256.** In some illustrative examples, at least one of first storage volume **217,** second storage volume **218**, third storage volume **254**, or fourth storage volume **256** is configured to accommodate a roller bag in at least one of a flat longitudinal orientation, an on-edge transverse orientation, a flat transverse orientation or an on-edge longitudinal orientation.

In these illustrative examples, rear **244** of first storage volume **217** and second storage volume **218** is also rear **244** for third storage volume **254** and fourth storage volume **256.** Third storage volume **254** has third opening **258.** Fourth storage volume **256** has fourth opening **260.** Third opening **258** and fourth opening **260** are accessed from a side of aircraft **201** opposite the side of aircraft **201** accessing first opening **238** and second opening **240.**

Overhead bin **204** of aircraft **201** includes substantially rigid **262** third shelf **264**, bin sides **266**, substantially rigid **268** fourth shelf **270**, and number of doors **216.** Bin sides **266** are connected to and extending upward from sides of third shelf **264.** Substantially rigid **268** fourth shelf **270** is above third shelf **264.** Bin sides **266** are connected to and extending upward from the sides of fourth shelf **270.** Number of doors **216** is configured to provide access to third shelf **264** and fourth shelf **270** from a second direction. Fourth shelf **270** is longer than third shelf **264.**

Third shelf **264** is substantially rigid **262** based on at least one of material or design. For example, third shelf **264** does not move substantially relative to the remainder of overhead bin **204.** Third shelf **264** is fixed relative to the remainder of overhead bin **204.**

Fourth shelf **270** is substantially rigid **268** based on at least one of material or design. For example, fourth shelf **270** does not move substantially relative to the remainder of overhead bin **204.** Fourth shelf **270** is fixed relative to the remainder of overhead bin **204.**

Third storage volume **254** is a volume between third shelf **264** and fourth shelf **270.** Fourth storage volume **256** is a volume between fourth shelf **270** and top **272** of overhead bin **204.** In some illustrative examples, the volume between third shelf **264** and fourth shelf **270** is configured to receive a third number of roller bags, and the volume between fourth shelf **270** and top **272** of overhead bin **204** is configured to receive a fourth number of roller bags.

In some illustrative examples, first shelf **211** and third shelf **264** are substantially the same. In these illustrative examples, second shelf **270**, and fourth shelf **270** are also substantially the same. Thus, overhead bin **204** is symmetrical about a centerline of overhead bin **204.**

Set of respective overhead bins **274** substantially aligned with row of passenger seats **276** is configured to accommodate at least one roller bag per seat in row of passenger seats **276.** Set of respective overhead bins **274** substantially aligned with row of passenger seats **276** includes either overhead bin **204** positioned only within centerline region **246** or overhead bin **204** associated with outboard sidewall **242** and another overhead bin (not depicted) associated with outboard sidewall **242** on an opposite side of passenger cabin **203.**

The illustration of overhead bins **206** of aircraft **201** in **Figure 2** is not meant to imply physical or architectural limitations to the manner in which an illustrative embodiment may be implemented. Other components, in addition to or in place of the ones illustrated, may be used. Some components may be unnecessary. Also, the blocks are presented to illustrate some functional components. One or more of these blocks may be combined, divided, or combined and divided into different blocks when implemented in an illustrative embodiment.

For example, row of passenger seats **276** is only a subset of passenger seats **278** present in passenger cabin **203.** Although not depicted, overhead bins **206** may include at least one respective overhead bin for each respective row of seats of passenger sets **278.**

Further, in some illustrative examples, overhead bin **204** does not have third storage volume **254** and fourth storage volume **256.** For example, when overhead bin **204** is associated with outboard sidewall **242**, overhead bin **204** only has first storage volume 217 and second storage volume **218.**

Further, although not depicted, overhead bins **206** includes more than just overhead bin **204.** For example, overhead bins **206** includes additional overhead bins following overhead bin **204**, moving in the direction of the length of aircraft **201.** In another example, when overhead bin **204** is associated with outboard sidewall **242**, an additional overhead bin **204** will service row of passenger seats **276** on an opposite side of centerline **228** on outboard sidewall **242.**

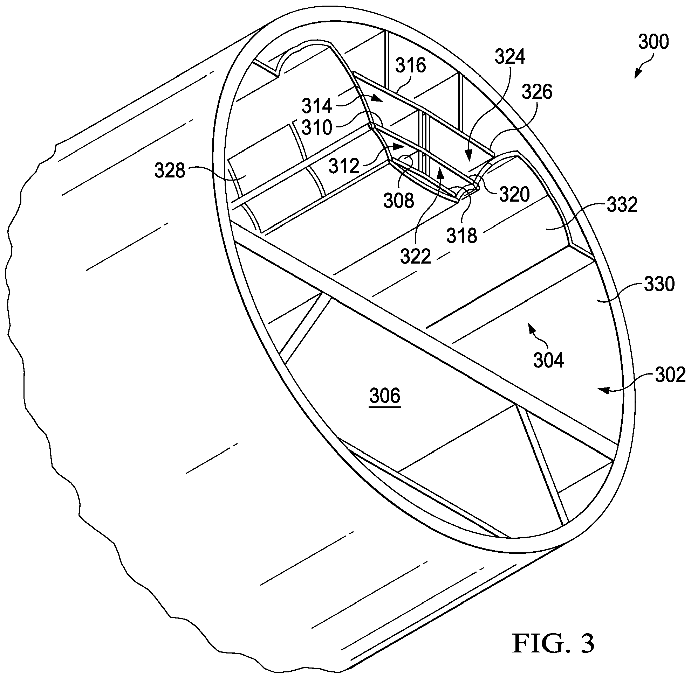

Turning now to **Figure 3**, an illustration of an isometric cross-sectional view of overhead bins installed in a passenger cabin in an aircraft is depicted in accordance with an illustrative embodiment. Aircraft **300** has passenger cabin **302** with overhead bins **304.** Aircraft **300** is one physical implementation of aircraft **201** of **Figure 2****.** **Figure 3** is an isometric cross-sectional view of aircraft **100** of **Figure 1****.** Cargo container **306** is located below passenger cabin **302.**

Overhead bins **304** are physical implementations of overhead bins **206** of **Figure 2****.** **Figure 3** is a cross-sectional view through overhead bin **206** of overhead bins **304.** Overhead bin **304** has first shelf **308** and second shelf **310.** Second shelf **310** is positioned over first shelf **308.** First storage volume **312** is between first shelf **308** and second shelf **310.** Second storage volume **314** is between second shelf **310** and top **316** of overhead bin **304.** Luggage or other items are placed into first storage volume **312** or second storage volume **314** from the same side of aircraft **300.**

Overhead bin **304** also includes third shelf **318** and fourth shelf **320.** Fourth shelf **320** is positioned over third shelf **318.** Third storage volume **322** is between third shelf **318** and fourth shelf **320.** Fourth storage volume **324** is between fourth shelf **320** and top **326** of overhead bin **304.** Luggage or other items are placed into third storage volume **322** and fourth storage volume **324** from the same side of the aircraft **300.** Third storage volume **322** and fourth storage volume **324** are accessed from an opposite side of aircraft **300** than first storage volume **312** and second storage volume **314.** In some illustrative examples, third shelf **318** and fourth shelf **320** may be described as being part of a separate overhead bin from first shelf **308** and second shelf **310.**

As depicted, surfaces **328** of overhead bins **304** are concave. Surfaces **328** are formed at least partially by a plurality of doors. By surfaces **328** being concave, aesthetically passenger cabin **302** appears to be more spacious. Lighting may be combined with the concave nature of surfaces **328** to affect the aesthetics of passenger cabin **302.**

In one illustrative example, overhead bin **304** is configured with a lower bin hinged door similar to and complemented by an upper bin roll-up door. The lower bin hinged door would moveably cover first storage volume **312** while upper bin roll-up door would moveably cover second storage volume **314.**

Passenger cabin **302** also has outboard sidewall **330.** Outboard sidewall **330** has a small installation for Passenger Service Units (PSUs), and optionally small personal stowage, for items such as a folding umbrella or a small purse. In some illustrative examples, upper portion **332** of outboard sidewall **330** has a smooth surface suitable for receiving projected images. For example, short-throw projectors can be used to present soothing images such as starry skies, sunny skies, cloudy skies, mood lighting images, or other soothing images and/or message or advertising images.

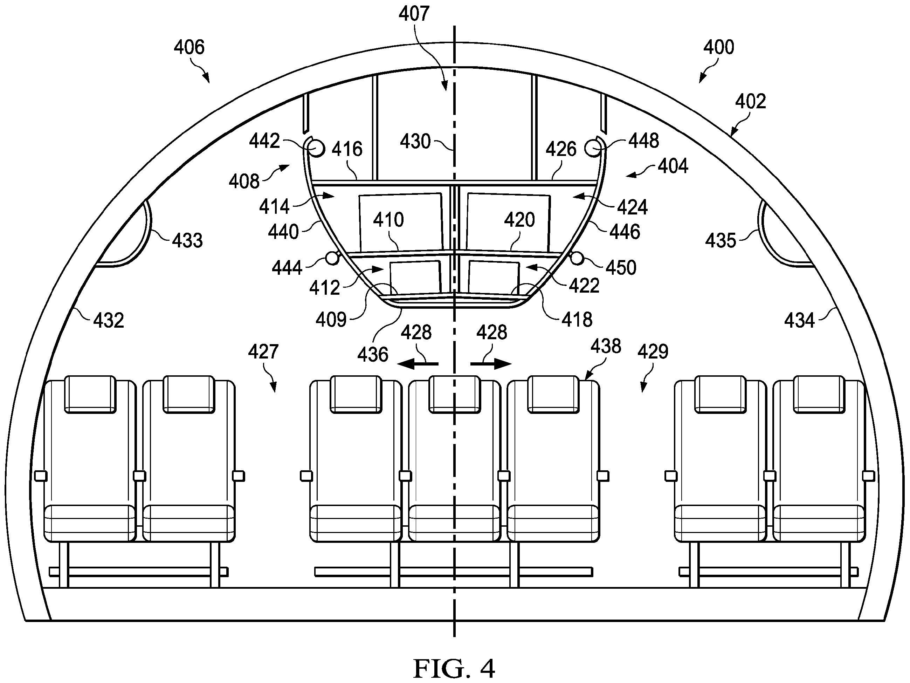

**Figures 4-12** each depict implementations of overhead bins having a substantially rigid first shelf and a substantially rigid second shelf above the first shelf. Each of **Figures 4-12** depicts a non-limiting illustrative example of how at least one overhead bin may be implemented.

Turning now to **Figure 4**, an illustration of a cross-sectional view of a first implementation of overhead bins installed in a passenger cabin in an aircraft is depicted in accordance with an illustrative embodiment. Aircraft **400** has passenger cabin **402** with overhead bins **404.** Aircraft **400** is one physical implementation of aircraft **201** of **Figure 2****.** **Figure 4** is an isometric cross-sectional view of aircraft **100** of **Figure 1****.** View **406** does not contain a cargo container or other structures below passenger cabin **402.**

Aircraft **400** has overhead bins **404** positioned only in centerline region **407** of aircraft **400.** Each overhead bin has a respective substantially rigid first shelf and a respective substantially rigid second shelf. The respective second shelf is above the respective first shelf. Overhead bins **404** are positioned substantially between two aisles of passenger cabin **402** of aircraft **400.**

Overhead bin **408** is one of overhead bins **404.** Overhead bin **408** is the bin cut through in cross-section in view **406** of **Figure 4****.**

Overhead bin **408** is a physical implementation of overhead bin **204** of **Figure 2****.** Overhead bin **408** has first shelf **409** and second shelf **410.** Second shelf **410** is positioned over first shelf **409.** Second shelf **410** is longer than first shelf **409.** First storage volume **412** is between first shelf **409** and second shelf **410.** Second storage volume **414** is between second shelf **410** and top **416** of overhead bin **408.** Luggage or other items are placed into first storage volume **412** or second storage volume **414** from the same side of aircraft **400.**

Overhead bin **408** also includes third shelf **418** and fourth shelf **420.** Fourth shelf **420** is positioned over third shelf **418.** Fourth shelf **420** is longer than third shelf **418.** Third storage volume **422** is between third shelf **418** and fourth shelf **420.** Fourth storage volume **424** is between fourth shelf **420** and top **426** of overhead bin **408.** Luggage or other items are placed into third storage volume **422** and fourth storage volume **424** from the same side of the aircraft **400.** For example, first storage volume **412** and second storage volume **414** may be accessed from aisle **427.** Third storage volume **422** and fourth storage volume **424** are accessed from an opposite side of aircraft **400** than first storage volume **412** and second storage volume **414.** For example, third storage volume **422** and fourth storage volume **424** may be accessed from aisle **429.** In some illustrative examples, third shelf **418** and fourth shelf **420** may be described as being part of a separate overhead bin from first shelf **409** and second shelf **410.**

As depicted, first shelf **409**, second shelf **410** third shelf **418**, and fourth shelf **420** each slope downward in outward direction **428** relative to centerline **430** of aircraft **400.** The slope downward may aid passengers and aircraft personnel in placing items onto first shelf **409**, second shelf **410** third shelf **418,** or fourth shelf **420.**

Aircraft **400** has outboard side wall **432** with passenger service unit **433** and outboard side wall **434** with passenger service unit **435.** Passenger service unit **436** for center seats **438** is positioned beneath first shelf **409** and third shelf **418.**

As depicted, first door **440** moveably covers first storage volume **412.** First door **440** also moveably covers second storage volume **414.** In this implementation, first door **440** is a rolling door. When desired, first door **440** is moved using door rotation roller **442** to access at least one of first storage volume **412** or second storage volume **414.** Movement of first door **440** may be controlled using a controller. In some illustrative examples, a controller may be associated with hand rail **444.**

Hand rail **444** may be used by passengers and aircraft personnel for maneuvering within passenger cabin **402.** Hand rail **444** also serves as a lip for inhibiting upper bin contents from falling out of second storage volume **414** when first door **440** is open, and when aircraft **400** is maneuvering or flying through turbulence.

When one component is "associated" with another component, the association is a physical association in the depicted examples. For example, a first component may be considered to be associated with a second component by being secured to the second component, bonded to the second component, mounted to the second component, welded to the second component, fastened to the second component, and/or connected to the second component in some other suitable manner. The first component also may be connected to the second component using a third component. The first component may also be considered to be associated with the second component by being formed as part of and/or an extension of the second component.

As depicted, second door **446** moveably covers third storage volume **422.** First door **440** also moveably covers and fourth storage volume **424.** In this implementation, second door **446** is a rolling door. When desired, second door **446** is moved using door rotation roller **448** to access at least one of third storage volume **422** or fourth storage volume **424.** Movement of second door **446** may be controlled using a controller. In some illustrative examples, a controller may be associated with hand rail **450.**

Hand rail **450** may be used by passengers and aircraft personnel for maneuvering within passenger cabin **402.** Hand rail **450** also serves as a lip for inhibiting upper bin contents from falling out of fourth storage volume **424** when second door **446** is open, and when aircraft **400** is maneuvering or flying through turbulence.

Overhead bin **408** as implemented is present in an airliner with a representative twin-aisle, seven-abreast, economy seating cross-sectional configuration. Whereas a twin aisle configuration is typically fitted, conventionally, with both outboard bins above the outer seating units and center bins above the center seating units, with the outboard and center bins being of pivot, shelf, or translating bin types. As depicted in this implementation, no outboard bins are present. **Figure 4** has large center bins arranged in a two-deep stacked shelf arrangement. This implementation provides more bin volume, reduced weight and cost impacts, and a more open outboard ceiling architecture than conventional designs.

The illustration of overhead bin **408** of aircraft **400** in **Figure 4** is not meant to imply physical or architectural limitations to the manner in which an illustrative embodiment may be implemented. Other components, in addition to or in place of the ones illustrated, may be used. Some components may be unnecessary.

For example, in some illustrative examples, the bin opening control may be positioned somewhere other than hand rail **444** or hand rail **450.** In another illustrative example, hand rail **444** or hand rail **450** may not be present.

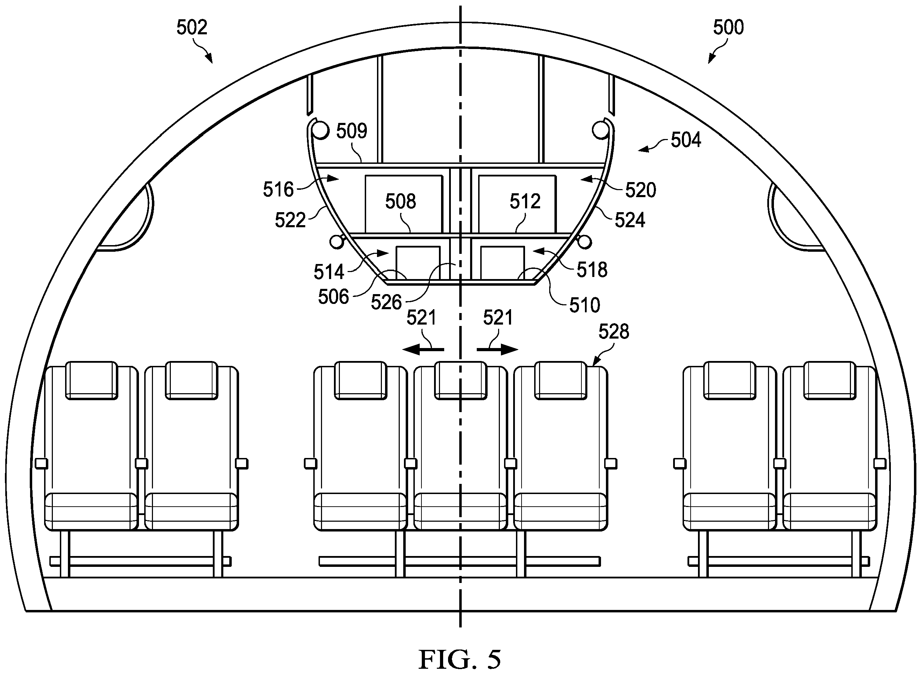

Turning now to **Figure 5**, an illustration of a cross-sectional view of another implementation of overhead bins installed in a passenger cabin in an aircraft is depicted in accordance with an illustrative embodiment. Aircraft **500** is a physical implementation of aircraft **201** of **Figure 2****.** Aircraft **500** may be the same as aircraft **100** of **Figure 1****.** In aircraft **500,** layout **502** of overhead bin **504** is substantially similar to overhead bin **404** of **Figure 4****.** The differences between overhead bin **504** and overhead bin **404** of **Figure 4** are detailed below.

As depicted, overhead bin **504** includes substantially rigid first shelf **506**, substantially rigid second shelf **508**, top **509**, substantially rigid third shelf **510**, substantially rigid fourth shelf **512**, and top **513** forming first storage volume **514**, second storage volume **516**, third storage volume **518**, and fourth storage volume **520.** In overhead bin **504**, first shelf **506,** second shelf **508**, third shelf **510**, and fourth shelf **512** are substantially planar. First shelf **506**, second shelf **508**, third shelf **510**, and fourth shelf **512** are substantially not sloped moving in outward direction **521.**

When first shelf **506** and third shelf **510** are substantially planar, better head room results for the center passengers seated below overhead bin **504.** From a human factors perspective, a clearance for high comfort for a tall seated person in a seat below the bottom of overhead bin **504** is desirably between 1,473 and 1,575 metres (i.e 58 and 62 inches), without limitation. In one non-limiting example, when first shelf **506**, second shelf **508**, third shelf **510**, and fourth shelf **512** are substantially planar, the nominal clearance is just over 1,524 metres (i.e. 60 inches) between the cabin floor and the lower surface of overhead bin **504.**

Overhead bin **504** has first door **522** moveably covering first storage volume **514** and second storage volume **516.** Overhead bin **504** has second door **524** moveably covering third storage volume **518** and fourth storage volume **520.** As depicted, both first door **522** and second door **524** are rolling doors.

Passenger service unit **526** has been shifted from the location of passenger service unit **436** of **Figure 4****.** As depicted, passenger service unit **526** for center seats **528** is positioned between first storage volume **514** and second storage volume **516.**

**Figure 5** is not a limiting example of implementations for overhead bin **504** with two substantially rigid shelfs. Although **Figure 5** is depicted as having two pairs of opposite facing volumes, in some illustrative examples, there may be a storage volume accessible using both first door **522** and second door **524.**

For example, in one implementation, second storage volume **516** and fourth storage volume **520** are not separated by rear faces. Instead, in this implementation, second shelf **508** and fourth shelf **512** are a single shelf forming a single storage volume accessible by both first door **522** and second door **524.** In another implementation, first storage volume **514** and third storage volume **518** are not separated by rear faces. Instead, in this implementation, first shelf **506** and third shelf **510** are a single shelf forming a single storage volume accessible by both first door **522** and second door **524.** In some illustrative examples, overhead bin **504** has two storage volumes accessible from both first door **522** and second door **524.**

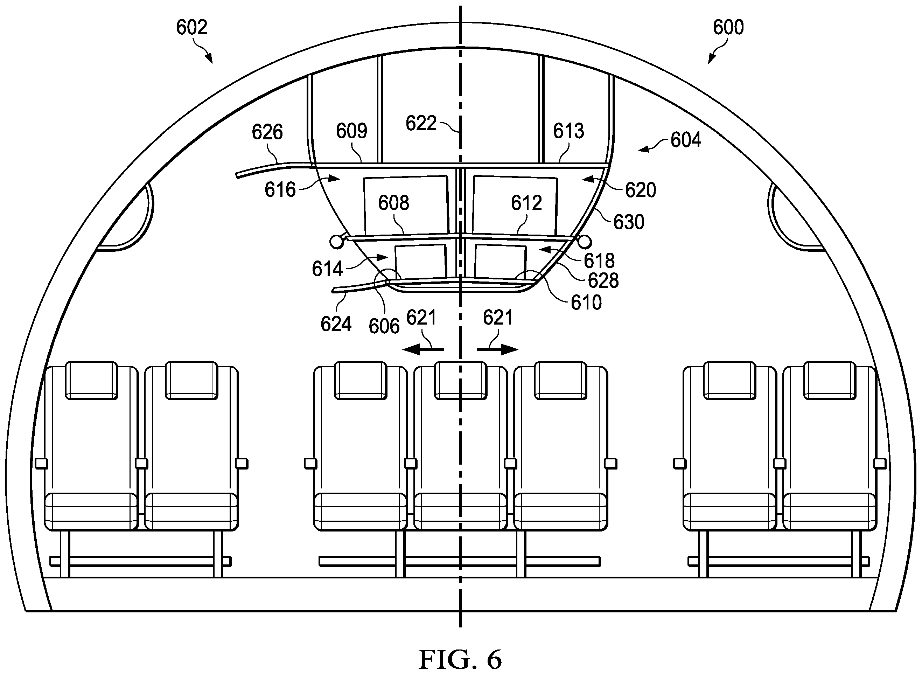

Turning now to **Figure 6**, an illustration of a cross-sectional view of another implementation of overhead bins installed in a passenger cabin in an aircraft is depicted in accordance with an illustrative embodiment. Aircraft **600** is a physical implementation of aircraft **201** of **Figure 2****.** Aircraft **600** may be the same as aircraft **100** of **Figure 1****.** In aircraft **600**, layout **602** of overhead bin **604** is substantially similar to overhead bin **404** of **Figure 4****.** The differences between overhead bin **604** and overhead bin **404** of **Figure 4** are detailed below.

As depicted, overhead bin **604** includes substantially rigid first shelf **606**, substantially rigid second shelf **608**, top **609**, substantially rigid third shelf **610**, substantially rigid fourth shelf **612**, and top **613** forming first storage volume **614**, second storage volume **616**, third storage volume **618**, and fourth storage volume **620.** Like overhead bin **404**, in overhead bin **604**, first shelf **606**, second shelf **608**, third shelf **610**, and fourth shelf **612** are sloped downward moving in outward direction **621** from centerline **622.**

Unlike in overhead bin **404**, overhead bin **604** has separate doors moveably covering first storage volume **614** and second storage volume **616.** As depicted, first door **624** moveably covers first storage volume **614.** Second door **626** moveably covers second storage volume **616.** As depicted, first door **624** and second door **626** are hinged.

As depicted, a bin closure for first storage volume **614** and second storage volume **616** comprises clamshell optionally coupled bin doors, in lieu of the roll-up doors of **Figure 4****.** The clamshell doors may be manually or electrically operated in variant implementations, and may be uncoupled or mechanically coupled or electrically coupled.

Further unlike in overhead bin **404**, overhead bin **604** has separate doors moveably covering third storage volume **618** and fourth storage volume **620.** As depicted, third door **628** moveably covers third storage volume **618.** Fourth door **630** moveably covers fourth storage volume **620.** As depicted, third door **628** and fourth door **630** are hinged.

As depicted, bin closure for third storage volume **618** and fourth storage volume **620** comprises clamshell optionally coupled bin doors, in lieu of the roll-up doors of **Figure 4****.** The clamshell doors may be manually or electrically operated in variant implementations, and may be uncoupled or mechanically coupled or electrically coupled.

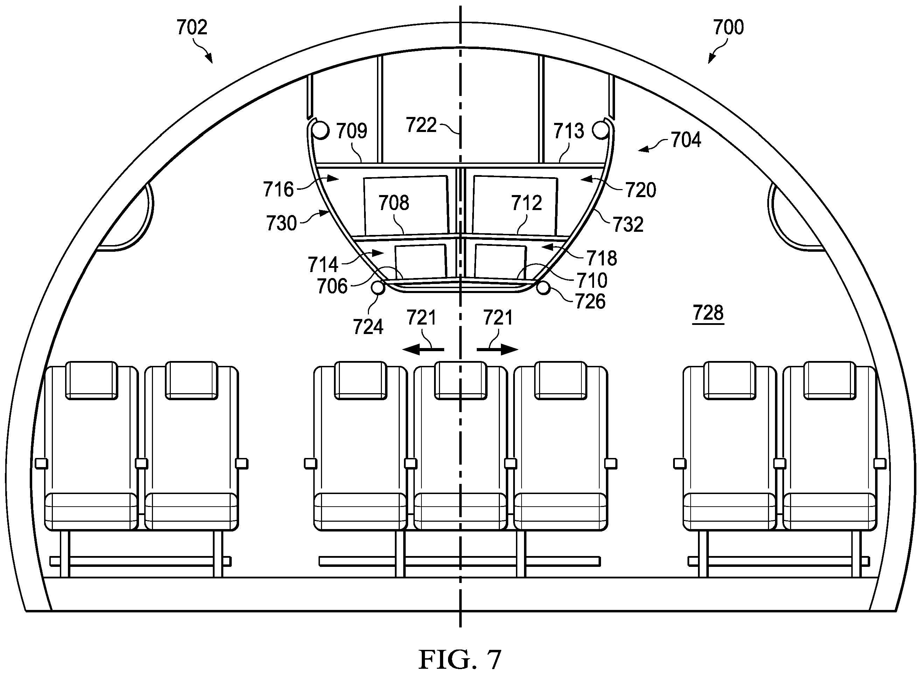

Turning now to **Figure 7**, an illustration of a cross-sectional view of another implementation of overhead bins installed in a passenger cabin in an aircraft is depicted in accordance with an illustrative embodiment. Aircraft **700** is a physical implementation of aircraft **201** of **Figure 2****.** Aircraft **700** may be the same as aircraft **100** of **Figure 1****.** In aircraft **700,** layout **702** of overhead bin **704** is substantially similar to overhead bin **404** of **Figure 4****.** The differences between overhead bin **704** and overhead bin **404** of **Figure 4** are detailed below.

As depicted, overhead bin **704** includes substantially rigid first shelf **706**, substantially rigid second shelf **708**, top **709**, substantially rigid third shelf **710**, substantially rigid fourth shelf **712**, and top **713** forming first storage volume **714**, second storage volume **716**, third storage volume **718**, and fourth storage volume **720.** Like overhead bin **404**, in overhead bin **704**, first shelf **706**, second shelf **708**, third shelf **710**, and fourth shelf **712** are sloped downward moving in outward direction **721** from centerline **722.**

Unlike overhead bin **404,** overhead bin **704** has hand rail **724** associated with first storage volume **714** and hand rail **726** associated with third storage volume **718.** The hand rails have been moved from overhead bin **404** of **Figure 4** to a level at or below the lower bins, as illustrated.

Hand rail **724** may be used by passengers and aircraft personnel for maneuvering within passenger cabin **728.** Hand rail **724** also serves as a lip for inhibiting lower bin contents from falling out of first storage volume **714** when first door **730** is open, and when aircraft **700** is maneuvering or flying through turbulence.

Hand rail **726** may be used by passengers and aircraft personnel for maneuvering within passenger cabin **728.** Hand rail **726** also serves as a lip for inhibiting lower bin contents from falling out of third storage volume **718** when second door **732** is open, and when aircraft **700** is maneuvering or flying through turbulence.

In this illustrative example, bin operating controls are integrated in any desirable locations. For example, bin operating controls may be integrated into hand rail **724** and hand rail **726**, as illustrated. As depicted, first door **730** and second door **732** are rolling doors. However, first door **730** and second door **732** may take any desirable form. Further, additional doors may be present in overhead bin **704.**

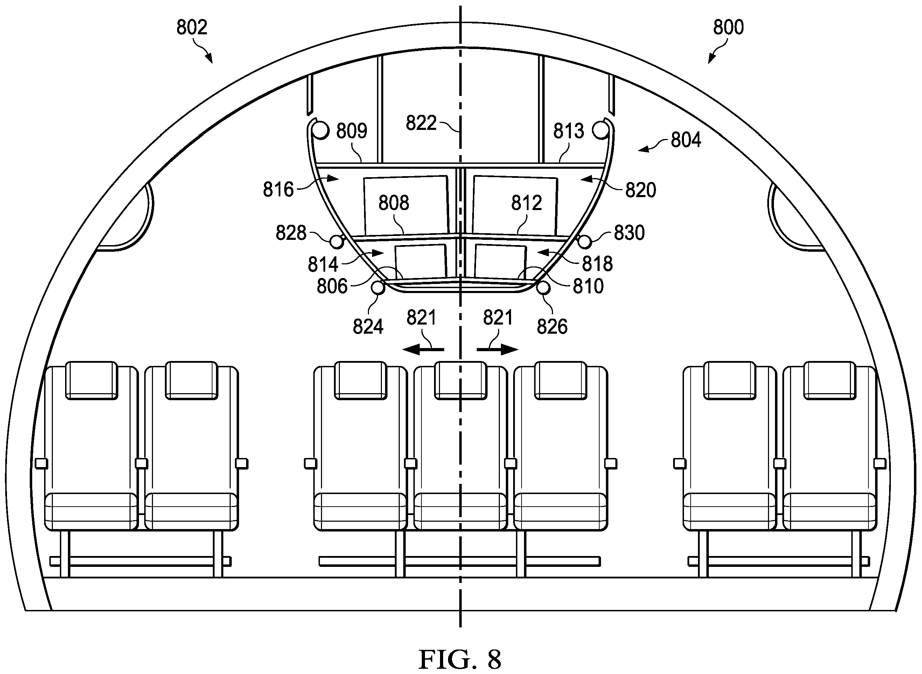

Turning now to **Figure 8**, an illustration of a cross-sectional view of another implementation of overhead bins installed in a passenger cabin in an aircraft is depicted in accordance with an illustrative embodiment. Aircraft **800** is a physical implementation of aircraft **201** of **Figure 2****.** Aircraft **800** may be the same as aircraft **100** of **Figure 1****.** In aircraft **800,** layout **802** of overhead bin **804** is substantially similar to overhead bin **404** of **Figure 4****.** The differences between overhead bin **804** and overhead bin **404** of **Figure 4** are detailed below.

As depicted, overhead bin **804** includes substantially rigid first shelf **806**, substantially rigid second shelf **808**, top **809**, substantially rigid third shelf **810**, substantially rigid fourth shelf **812**, and top **813** forming first storage volume **814**, second storage volume **816**, third storage volume **818**, and fourth storage volume **820.** Like overhead bin **404**, in overhead bin **804**, first shelf **806**, second shelf **808**, third shelf **810**, and fourth shelf **812** are sloped downward moving in outward direction **821** from centerline **822.**

Unlike in overhead bin **404**, overhead bin **804** has hand rail **824** associated with first storage volume **814** and hand rail **826** associated with third storage volume **818** in addition to hand rail **828** associated with second storage volume **816** and hand rail **830** associated with fourth storage volume **820.** Each of hand rail **824**, hand rail **826**, hand rail **828**, and hand rail **830** may serve as lips for inhibiting contents of respective storage volumes from falling out of overhead bin **804** when a respective bin door is open and when the aircraft is maneuvering or flying through turbulence.

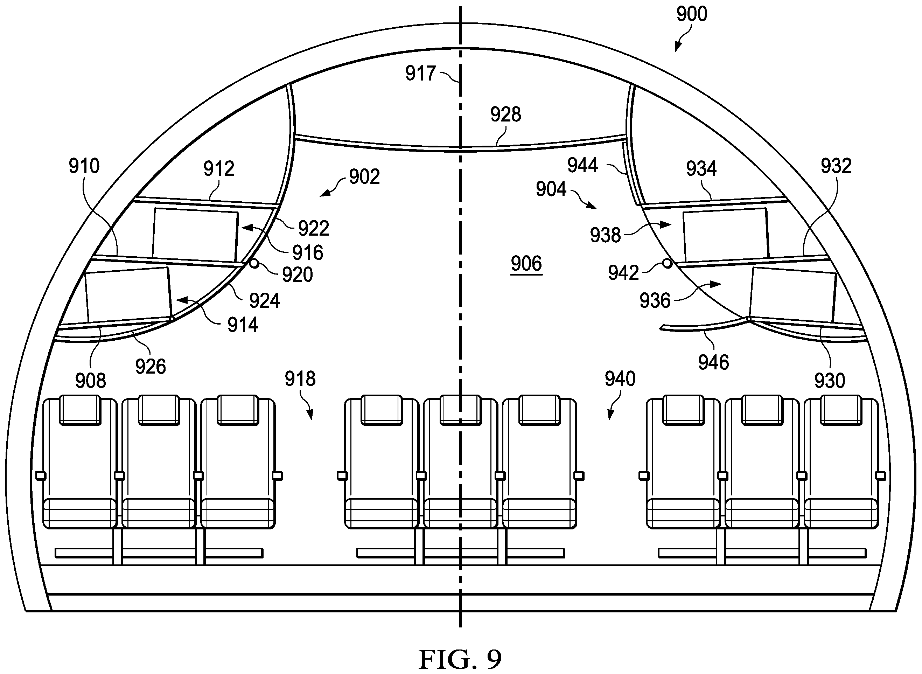

Turning now to **Figure 9**, an illustration of a cross-sectional view of another implementation of overhead bins installed in a passenger cabin in an aircraft is depicted in accordance with an illustrative embodiment. Aircraft **900** is a physical implementation of aircraft **201** of **Figure 2****.** In some illustrative examples, although aircraft **100** of **Figure 1** is depicted as having centerline bins, aircraft **100** may instead have the same design as aircraft **900.**

As depicted, aircraft **900** is an airliner with a representative twin-aisle, nine-abreast, economy seating cross-sectional configuration. Conventionally, a twin-aisle configuration is typically fitted, with both outboard bins above the outer seating units and center bins above the center seating units, with the outboard and center bins being shelf, pivot, or translating bin types. Aircraft **900** has no center bins but has large outboard bins arranged in a two-deep stacked arrangement.

Overhead bin **902** and overhead bin **904** allow for storage of luggage for all passengers without a center bin. Removal of a center bin may cause passenger cabin **906** to appear more spacious.

Overhead bin **902** is a physical implementation of overhead bin **204** of **Figure 2****.** Overhead bin **902** has substantially rigid first shelf **908**, substantially rigid second shelf **910**, and top **912** forming first storage volume **914** and second storage volume **916.** Second shelf **910** is positioned over first shelf **908.** Second shelf **910** is longer than first shelf **908.**

As depicted, first shelf **908** is sloped downward in an outward direction relative to centerline **917** of aircraft **900.** The downward slope towards the sidewall of aircraft **900** may aid in retention of items within first storage volume **914.** As depicted, second shelf **910** is sloped upward in an outward direction relative to centerline **917** of aircraft **900.** The slope upward towards the sidewall of aircraft **900** may aid passengers and airline personnel in placing items within second storage volume **916.**

First storage volume **914** is between first shelf **908** and second shelf **910.** Second storage volume **916** is between second shelf **910** and top **912** of overhead bin **902.** Luggage or other items are placed into first storage volume **914** or second storage volume **916** from the same side of aircraft **900.** For example, luggage or other items are placed into first storage volume **914** or second storage volume **916** from aisle **918.**

Hand rail **920** may be used by passengers and aircraft personnel for maneuvering within passenger cabin **906.** Hand rail **920** also serves as a lip for inhibiting upper bin contents from falling out of second storage volume **916** when first door **922** is open, and when aircraft **900** is maneuvering or flying through turbulence. As depicted, first door **922** may be a sliding or a hinged door. First door **922** moves independently of second door **924** moveably covering first storage volume **914.** As depicted, second door **924** is a hinged door.

In some illustrative examples, first door **922** and second door **924** may be controlled by a same set of controls. In other illustrative examples, first door **922** and second door **924** may be controlled by different sets of controls. The controls for first door **922** and second door **924** may be positioned in any desirable location. In some illustrative examples, the controls for first door **922** and second door **924** may be associated with hand rail **920.**

As depicted, first door **922**, second door **924**, and passenger service unit **926** below first shelf **908** are convex. Further, ceiling **928** of passenger cabin **906** is convex as depicted. In some illustrative examples, any of these components may be concave or planar.

Overhead bin **904** is a physical implementation of overhead bin **204** of **Figure 2****.** Overhead bin **904** has substantially rigid third shelf **930**, substantially rigid fourth shelf **932**, and top **934** forming third storage volume **936** and fourth storage volume **938.** Fourth shelf **932** is positioned over third shelf **930.** Fourth shelf **932** is longer than third shelf **930.**

As depicted, third shelf **930** is sloped downward in an outward direction relative to centerline **917** of aircraft **900.** The downward slope towards the sidewall of aircraft **900** may aid in retention of items within third storage volume **932.** As depicted, fourth shelf **932** is sloped upward in an outward direction relative to centerline **917** of aircraft **900.** The slope upward towards the sidewall of aircraft **900** may aid passengers and airline personnel in placing items within fourth storage volume **938.**

Third storage volume **936** is between third shelf **930** and fourth shelf **932.** Fourth storage volume **938** is between fourth shelf **932** and top **934** of overhead bin **904.** Luggage or other items are placed into third storage volume **936** or fourth storage volume **938** from the same side of aircraft **900.** For example, luggage or other items are placed into third storage volume **936** or fourth storage volume **938** from aisle **940.**

Hand rail **942** may be used by passengers and aircraft personnel for maneuvering within passenger cabin **906.** Hand rail **942** also serves as a lip for inhibiting upper bin contents from falling out of fourth storage volume **938** when third door **944** is open, and when aircraft **900** is maneuvering or flying through turbulence. As depicted, third door **944** may be a sliding or a hinged door. Third door **944** moves independently of fourth door **946** moveably covering third storage volume **936.** As depicted, fourth door **946** is a hinged door.

In some illustrative examples, third door **944** and fourth door **946** may be controlled by a same set of controls. In other illustrative examples, third door **944** and fourth door **946** may be controlled by different sets of controls. The controls for third door **944** and fourth door **946** may be positioned in any desirable location. In some illustrative examples, the controls for third door **944** and fourth door **946** may be associated with hand rail **942.** As depicted, third door **944**, fourth door **946**, and passenger service unit **926** below third shelf **930** are convex.

As depicted, first door **922** may be substantially the same as third door **944**, but in a closed position. As depicted, second door **924** may be substantially the same as fourth door **946,** but in a closed position.

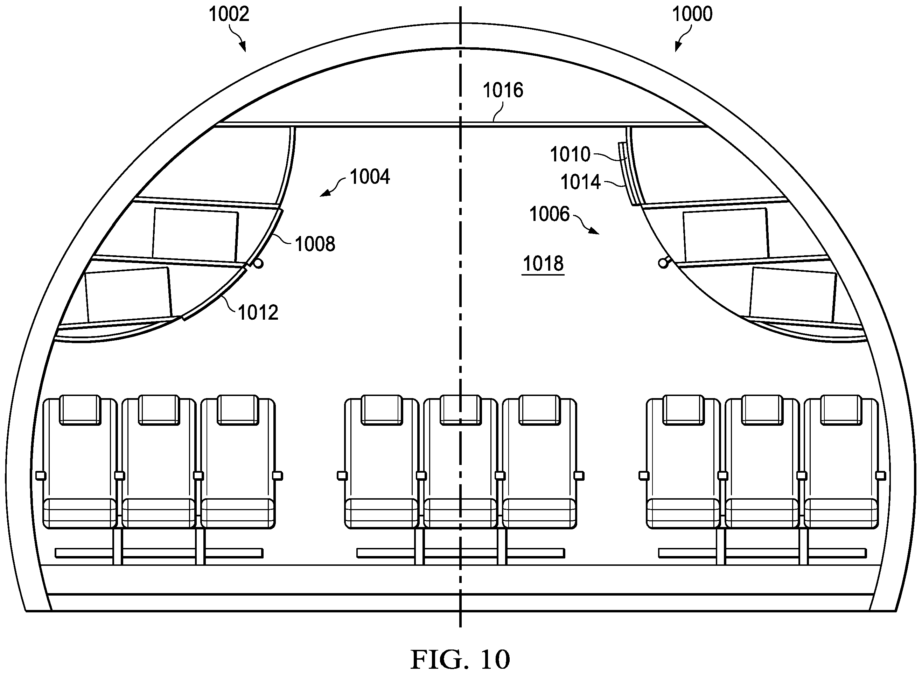

Turning now to **Figure 10**, an illustration of a cross-sectional view of another implementation of overhead bins installed in a passenger cabin in an aircraft is depicted in accordance with an illustrative embodiment. Aircraft **1000** is a physical implementation of aircraft **201** of **Figure 2**. In some illustrative examples, although aircraft **100** of **Figure 1** is depicted as having centerline bins, aircraft **100** may instead have the same design as aircraft **1000.** In aircraft **1000**, layout **1002** of overhead bin **1004** and overhead bin **1006** is substantially similar to overhead bin **902** and overhead bin **904** of **Figure 9****.** The differences between overhead bin **902** and overhead bin **904** of **Figure 9** and overhead bin **1004** and overhead bin **1006** are detailed below.

Overhead bin **1004** and overhead bin **1006** are depicted each with a 2-panel bin door that opens with the panels sliding one behind the other. Mechanical and/or electric opening and closing means may be provided, with weight counterbalancing optionally provided as well. Bin door controls may be associated with at least one of the lower bin space or the upper bin space.

As depicted, first door **1008** may be substantially the same as third door **1010**, but in a closed position. As depicted, second door **1012** may be substantially the same as fourth door **1014,** but in a closed position. The controls for first door **1008,** second door **1012**, third door **1010**, and fourth door **1014** may be positioned in any desirable location. Further, the controls may take any desirable mechanical or electrical form.

In **Figure 10**, ceiling **1016** of passenger cabin **1018** is substantially planar. Changing the shape of ceiling **1016** affects the aesthetics of passenger cabin **1018.** When ceiling **1016** of passenger cabin **1018** is planar, passenger cabin **1018** may appear more spacious.

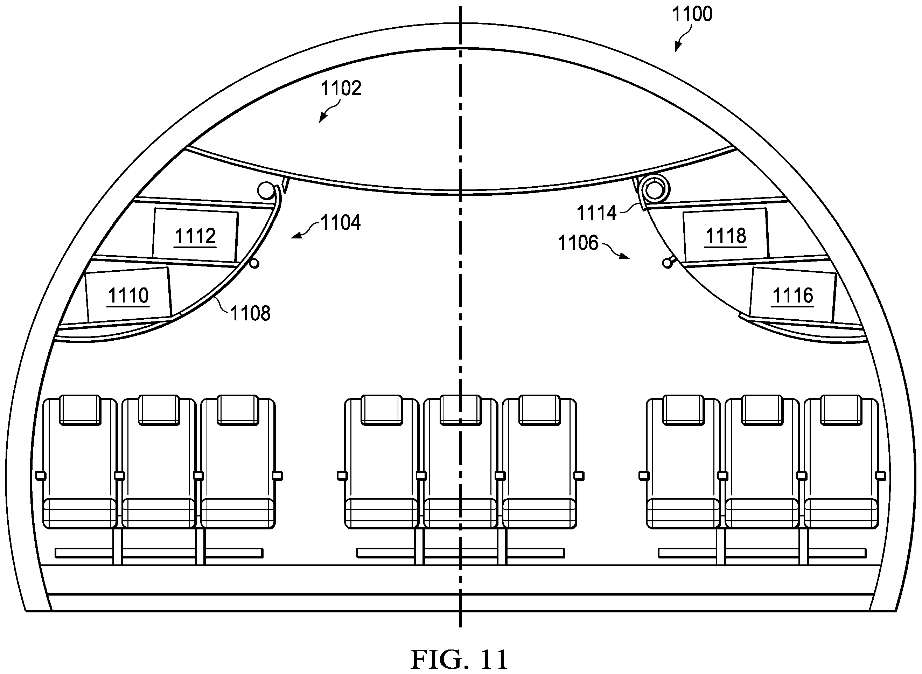

Turning now to **Figure 11**, an illustration of a cross-sectional view of another implementation of overhead bins installed in a passenger cabin in an aircraft is depicted in accordance with an illustrative embodiment. Aircraft **1100** is a physical implementation of aircraft **201** of **Figure 2****.** In some illustrative examples, although aircraft **100** of **Figure 1** is depicted as having centerline bins, aircraft **100** may instead have the same design as aircraft **1100.** In aircraft **1100**, layout **1102** of overhead bin **1104** and overhead bin **1106** is substantially similar to overhead bin **902** and overhead bin **904** of **Figure 9****.** The differences between overhead bin **902** and overhead bin **904** of **Figure 9** and overhead bin **1104** and overhead bin **1106** are detailed below.

Overhead bin **1104** and overhead bin **1106** are depicted each with roll-up doors and hand rails. As depicted, first door **1108** moveably covers first storage volume **1110** and second storage volume **1112** of overhead bin **1104.** As depicted, second door **1114** moveably covers third storage volume **1116** and fourth storage volume **1118.** First door **1108** and second door **1114** may be substantially the same, however, first door **1108** is depicted in a closed position and second door **1114** in an open position. The controls for first door **1108** and second door **1114** may be positioned in any desirable location. Further, the controls may take any desirable mechanical or electrical form.

The different components shown in **Figure 1** and **Figures 3****-11** may be combined with components in **Figure 2**, used with components in **Figure 2**, or a combination of the two. Additionally, some of the components in **Figure 1** and **Figures 3-****11** may be illustrative examples of how components shown in block form in **Figure 2** can be implemented as physical structures.

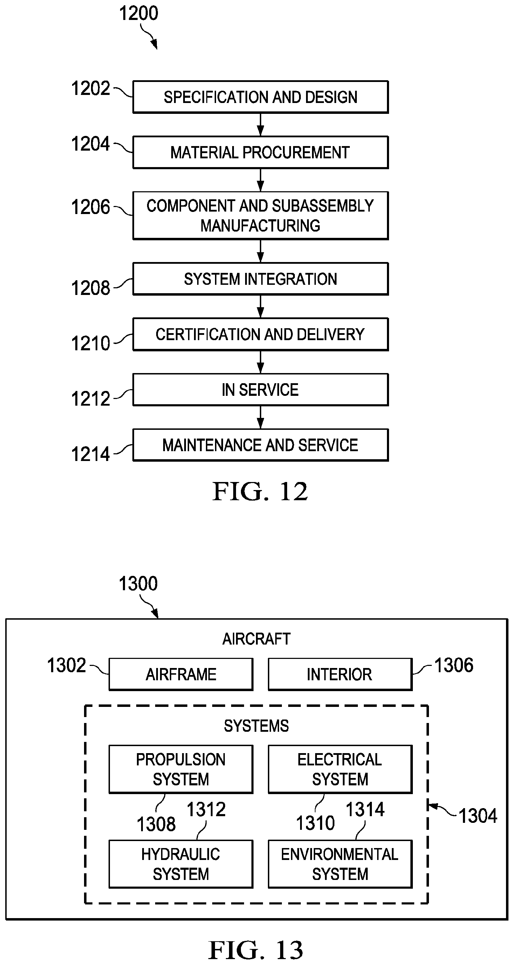

Illustrative embodiments of the present disclosure may be described in the context of aircraft manufacturing and service method **1200** as shown in **Figure 12** and aircraft **1300** as shown in **Figure 13**. Turning first to **Figure 12**, an illustration of a block diagram of an aircraft manufacturing and service method is depicted in accordance with an illustrative embodiment. During pre-production, aircraft manufacturing and service method **1200** may include specification and design **1202** of aircraft **1300** in **Figure 13** and material procurement **1204.**

During production, component and subassembly manufacturing **1206** and system integration **1208** of aircraft **1300** takes place. Thereafter, aircraft **1300** may go through certification and delivery **1210** in order to be placed in service **1212.** While in service **1212** by a customer, aircraft **1300** is scheduled for routine maintenance and service **1214**, which may include modification, reconfiguration, refurbishment, or other maintenance and service.

Each of the processes of aircraft manufacturing and service method **1200** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 13**, an illustration of a block diagram of an aircraft is depicted in which an illustrative embodiment may be implemented. In this example, aircraft **1300** is produced by aircraft manufacturing and service method **1200** in **Figure 12** and may include airframe **1302** with plurality of systems **1304** and interior **1306.** Examples of systems **1304** include one or more of propulsion system **1308**, electrical system **1310**, hydraulic system **1312**, and environmental system **1314.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1200** of **Figure 12****.**
One or more illustrative embodiments may be used during component and subassembly manufacturing **1206.** For example, overhead bin **204** of **Figure 2** may be installed within aircraft **201** during component and subassembly manufacturing **1206** of **Figure 12****.** Further, replacements for overhead bin **204** of **Figure 2** may be installed within aircraft **201** during maintenance and service **1214** of **Figure 12****.**

In one illustrative example, a central storage compartment is positioned in a central crown section of the interior of a passenger cabin. The compartment has an upper and lower storage compartment each having a door for access. The passenger cabin also has a unitary cabin sidewall structure that extends from the cabin floor to the central storage compartment.

The illustrative embodiments provide a very large capacity bin system called "megabin", for application in airliners. Passengers will be able to put bags such as roll-aboard bags in two stacked layers of bins, which can be either outboard or substantially at the airliner's centerline region. The illustrative embodiments provide bin capacity for passenger carry-on bags, e.g. for at least one roll-aboard bag per economy class passenger, combined with reduced aircraft weight and cost and integration with ceiling lines and lighting to provide a spacious feel to the passenger cabin, preferred aesthetics, an opportunity to have smooth surfaces for custom airline displays or advertising, good ergonomics and human factors for passengers and flight attendants, and available bins for use by shorter stature people.

The illustrative embodiments provide overhead bins that have improvements over conventional bins. The illustrative embodiments are shelf-type bins. Shelf-type bins may be lighter weight than prior-art bins, such as translating or pivot bins. For example, shelf-type bins have fewer components and therefore less weight. For example, shelf-type bins do not have systems to allow translation or rotation of the stowage bin. Further, shelf-type bins may have a reduced cost relative to prior-art pivot bins. The costs, including both recurring and nonrecurring, may be reduced by simplified manufacturing, reduced components, and less frequent maintenance or replacement due to simplified movement systems.

A shelf-type bin may be more rugged, durable, and damage-resistant than conventional pivot and translating bins. Further, a shelf-type bin is highly reliable and maintainable.

The illustrative examples present an airliner configured with a high capacity overhead stowage bin. The airliner has a cabin, an overhead stowage bin, a first shelf, a second shelf, first bin enclosure opening means, second bin enclosure opening means, first bin enclosure closing means, and second bin enclosure closing means. The airliner has a cabin capable of having installed more than one seat suitable for passenger seating certified for flight as well as taxi, takeoff and landing. The overhead stowage bin is located at a level above said seat. The first shelf of said overhead stowage bin is capable of supporting a first roller bag in a first volumetric space sufficient to accommodate said first roller bag. The second shelf is located above said first shelf and above said first volumetric space, said second shelf capable of supporting a second roller bag in a second volumetric space sufficient to accommodate said second roller bag. The first bin enclosure opening means is for enabling loading of said first roller bag from the cabin into said first volumetric space and second bin enclosure opening means is for enabling loading of said second roller bag from the cabin into said second volumetric space, when said first bin enclosure opening means and said second bin enclosure opening means are both in a fully open configuration. The first bin enclosure closing means is for enabling prevention of said first roller bag from falling into the cabin in the event of turbulence encountered by said airliner, when said first bin enclosure closing means is in a fully closed configuration. The second bin enclosure closing means is for enabling prevention of said second roller bag from falling into the cabin in the event of turbulence encountered by said airliner, when said second bin enclosure closing means is in a fully closed configuration.

In some illustrative examples, the airliner has said overhead stowage bin comprising a central stowage bin located above a central seat, said central seat being located between two longitudinal aisles of the airliner. In other illustrative examples, the overhead stowage bin comprises an outboard stowage bin located at a level above an outboard seat, said outboard seat being located between a longitudinal aisle of the airliner and a fuselage side wall of the airliner. In some examples, the more than one seat includes at least one of an economy-class seat, a tourist-class seat, a premium economy-class seat, a business-class seat, and a first-class seat.

In some illustrative examples, at least one of said first shelf and said second shelf slopes downward in an outward direction relative to the centerline of said airliner. In some illustrative examples, at least one of said first shelf and said second shelf slopes downward in an inward direction relative to the centerline of said airliner. In some illustrative examples, at least one of said first shelf and said second shelf has substantially no slope in an outward direction relative to the centerline of said airliner.

In some illustrative examples, the airliner further comprises friction reducing means for reducing frictional resistance to bag loading and unloading, said friction reducing means comprising at least one of a roller, a roller tray, a powered roller, a wheel, a low-friction shelf surface, a low-friction shelf liner, and a shelf surface incorporating polytetrafluoroethylene (PTFE) or equivalent low-friction surface panel elements.

In some illustrative examples, said first volumetric space is configured to accommodate said first roller bag in at least one of: a flat longitudinal orientation, an on-edge transverse orientation, a flat transverse orientation, and an on-edge longitudinal orientation. In some illustrative examples, said second volumetric space is configured to accommodate said second roller bag in at least one of: a flat longitudinal orientation, an on-edge transverse orientation, a flat transverse orientation, and an on-edge longitudinal orientation.

In some illustrative examples, at least one of said first bin enclosure opening means and said second bin enclosure opening means comprise roll up door means. In some illustrative examples, at least one of said first bin enclosure opening means and said second bin enclosure opening means comprise hinged door panel means. In some illustrative examples, at least one of said first bin enclosure opening means and said second bin enclosure opening means comprise sliding door means.

In some illustrative examples, said overhead storage bin is structurally connected to at least one railing that can be grasped by a hand of a person standing in a longitudinal aisle of said airliner. In some illustrative examples, said railing comprises a substantially continuous longitudinal railing. In some illustrative examples, said railing serves as lip means for bags to be loaded over and into a bin. In some illustrative examples, said railing is fitted with control means for controlling a bin door, operable by a person standing in a longitudinal aisle of said airliner. The control means may include at least one of a button, a switch, a latch, a control pad, a touchless control sensor, or any other desirable means for controlling a bin door.
Note that the illustrative examples as disclosed do not specify a particular roller bag size, and in fact varied airplane embodiments may be designed to accommodate varied roller bag sizes, and optionally have different bins sized for different bag sizes as well.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An overhead bin (204) of an aircraft (201), comprising:
a first storage volume (217) between a substantially rigid (210) first shelf (211) and a substantially rigid (214) second shelf (215), the first storage volume (217) having a first opening (238);
a second storage volume (218) above the first storage volume (217), the second storage volume (218) between the second shelf (215) and a top (220) of the overhead bin (204), the second storage volume (218) having a second opening (240), wherein the first opening (238) and the second opening (240) are accessed from a same side of the aircraft (201);
a first door (440, 624, or 1012) moveably covering the first opening (238) or
at least one of a first door (440, 624, or 1012) moveably covering both the first opening (238) and the second opening (240) or a first door (440, 624, or 1012) and a second door (626, or 1008) moveably covering, respectively, the first opening (238) and the second opening (240);
at least one hand rail (234) associated with at least one of the first storage volume (217) or the second storage volume (218), said hand rail (234) serving as a lip for inhibiting items from falling out of the first storage volume (217) or the second storage volume (218) when respective door is open,
wherein said hand rail (234) hangs outside the corresponding storage volume (217, 218).

2. The overhead bin (204) of any one of claim 1, wherein the overhead bin (204) is a centerline bin.

3. The overhead bin (204) of claim 2 further comprising:
a third storage volume (254) with a third opening (258); and
a fourth storage volume (256) with a fourth opening (260), wherein the third opening (258) and the fourth opening (260) are accessed from a side of the aircraft (201) opposite the side of the aircraft (201) accessing the first opening (238) and the second opening (240).

4. The overhead bin (204) of any one of claims 1-3, wherein the first storage volume (217) is configured to accommodate a roller bag in at least one of a flat longitudinal orientation, an on-edge transverse orientation, a flat transverse orientation or an on-edge longitudinal orientation.

5. The overhead bin (204) of any one of claims 1-4, further comprising:
a movement system (241) associated with at least one of the first shelf (211) or the second shelf (215), wherein the movement system (241) is configured to reduce frictional resistance to bag loading and unloading to the overhead bin (204).

6. The overhead bin (204) of claim 5, wherein the movement system (241) comprises at least one of a roller, a roller tray, a powered roller, a wheel, a low-friction shelf surface, a low-friction shelf liner, or a shelf surface incorporating a low-friction material.

7. The overhead bin (204) of any one of claims 1-6, wherein at least one of the first shelf (211) or the second shelf (215) slopes downward in an outward direction relative to a centerline (228) of the aircraft (201).

8. The overhead bin (204) of any one of claims 1-6, wherein at least one of the first shelf (211) or the second shelf (215) slopes downward in an inward direction relative to a centerline (228) of the aircraft (201).

9. The overhead bin (204) of any one of claims 1-8, wherein the second shelf (215) is longer than the first shelf (211).

10. An aircraft (201) having overhead bins (206) positioned only in a centerline region (246) of the aircraft (201), the aircraft (201) comprising:
the overhead bins (206) positioned only in the centerline region (246) of the aircraft (201), wherein each overhead bin (204) has a respective substantially rigid (210) first shelf (211) and a respective substantially rigid (214) second shelf (215), wherein the respective second shelf (215) is above the respective first shelf (211), and wherein the overhead bins (206) are positioned substantially between two aisles (247) of a passenger cabin (203) of the aircraft (201), wherein the overhead bins (206) are in accordance with any of claims 1-9.

11. The aircraft (201) of claim 10, wherein a vertical clearance (248) between a cabin floor (250) and a bottom (252) of the overhead bins (206) is at least 1,473 metres (i.e. 58 inches).

12. The aircraft (201) of claims 10 or 11, wherein a first storage volume (217) between the respective first shelf (211) and the respective second shelf (215) is configured to accommodate a first number of roller bags, and wherein a second storage volume (218) from the second shelf (215) upward is configured to accommodate a second number of roller bags.

13. The aircraft (201) of any one of claims 10-12, wherein a set of respective overhead bins (206) substantially aligned with a row of passenger seats (276) is configured to accommodate at least one roller bag per seat in the row of passenger seats (276).

## Patentansprüche

1. Überkopfgepäckfach (204) für ein Luftfahrzeug (201), mit:
einem ersten Aufbewahrungsvolumen (217) zwischen einem im Wesentlichen festen (210) ersten Fachbrett (211) und einem im Wesentlichen festen (214) zweiten Fachbrett (215), wobei das erste Aufbewahrungsvolumen (217) eine erste Öffnung (238) aufweist;
einem zweiten Aufbewahrungsvolumen (218) über dem ersten Aufbewahrungsvolumen (217), wobei das zweite Aufbewahrungsvolumen (218) zwischen dem zweiten Fachbrett (215) und einer Oberseite (220) des Überkopfgepäckfachs (204) ist, wobei das zweite Aufbewahrungsvolumen (218) eine zweite Öffnung (240) aufweist, wobei auf die erste Öffnung (238) und die zweite Öffnung (240) von derselben Seite des Luftfahrzeugs (201) zugegriffen wird;
einer ersten Tür (440, 624 oder 1012), die bewegbar die erste Öffnung (238) abdeckt, oder
mindestens eine von einer ersten Tür (440, 624 oder 1012), die bewegbar sowohl die erste Öffnung (238) und die zweite Öffnung (240) abdeckt, oder einer ersten Tür (440, 624 oder 1012) und einer zweiten Tür (626 oder 1008), die bewegbar jeweils die erste Öffnung (238) bzw. die zweite Öffnung (240) abdecken;
mindestens einem Handlauf (234), der mindestens einer von dem ersten Aufbewahrungsvolumen (217) oder dem zweiten Aufbewahrungsvolumen (218) zugeordnet ist, wobei der Handlauf (234) als eine Lippe dient, die vermeidet, dass Gegenstände aus dem ersten Aufbewahrungsvolumen (217) oder dem zweiten Aufbewahrungsvolumen (218) fallen, wenn die jeweilige Tür offen ist,
wobei der Handlauf (234) außerhalb des entsprechenden Aufbewahrungsvolumens (217, 218) hängt.

2. Überkopfgepäckfach (204) nach einem von Anspruch 1, wobei das Überkopfgepäckfach (204) ein Mittelliniengepäckfach ist.

3. Überkopfgepäckfach (204) nach Anspruch 2, des Weiterein mit:
einem dritten Aufbewahrungsvolumen (254) mit einer dritten Öffnung (258); und
einem vierten Aufbewahrungsvolumen (256) mit einer vierten Öffnung (260),
wobei die dritte Öffnung (258) und die vierte Öffnung (260) von einer Seite des Luftfahrzeugs (201) entgegengesetzt zu der Seite des Luftfahrzeugs (201) zugegriffen wird, von der auf die erste Öffnung (238) und die zweite Öffnung (240) zugegriffen wird.

4. Überkopfgepäckfach (204) nach einem der Ansprüche 1 bis 3, wobei das erste Aufbewahrungsvolumen (217) dazu konfiguriert ist, einen Rollkoffer in zumindest einem von einer flachen longitudinalen Orientierung, einer auf der Kante transversalen Orientierung, einer flachen transversalen Orientierung oder eine auf der Kante longitudinalen Orientierung aufzunehmen.

5. Überkopfgepäckfach (204) nach einem der Ansprüche 1 bis 4, des Weiterein mit:
einem Bewegungssystem (241), das zumindest einem von dem ersten Fachbrett (211) oder dem zweiten Fachbrett (215) zugeordnet ist, wobei das Bewegungssystem (241) dazu konfiguriert ist, einen Reibwiderstand zum Koffer Be- und Entladen dem Überkopfgepäckfach (204) bereitzustellen.

6. Überkopfgepäckfach (204) nach Anspruch 5, wobei das Bewegungssystem (241) zumindest eines von einer Rolle, einem Rollenfach, einer angetriebenen Rolle, einem Rad, einer Fachoberfläche mit niedrigem Reibkoeffizienten, einer Fachauskleidung mit niedrigem Reibkoeffizienten oder einer Fachoberfläche, die ein Material mit niedrigem Reibkoeffizienten aufweist, aufweist.

7. Überkopfgepäckfach (204) nach einem der Ansprüche 1 bis 6, wobei zumindest eines von dem ersten Fachbrett (211) oder dem zweiten Fachbrett (215) nach unten in eine Richtung nach außen relativ zu einer Mittellinie (228) des Luftfahrzeugs (201) geneigt ist.

8. Überkopfgepäckfach (204) nach einem der Ansprüche 1 bis 6, wobei zumindest eines von dem ersten Fachbrett (211) oder dem zweiten Fachbrett (215) nach außen in einer Richtung nach innen relativ zu einer Mittellinie (228) des Luftfahrzeugs (201) geneigt ist.

9. Überkopfgepäckfach (204) nach einem der Ansprüche 1 bis 8, wobei das zweite Fachbrett (215) länger ist als das erste Fachbrett (211).

10. Luftfahrzeug (201), das Überkopfgepäckfächer (206) aufweist, die nur in einem Mittellinienbereich (246) des Luftfahrzeugs (201) angeordnet sind, wobei das Luftfahrzeug (201) aufweist:
die Überkopfgepäckfächer (206), die nur in dem Mittellinienbereich (246) des Luftfahrzeugs (201) angeordnet sind, wobei jedes Überkopfgepäckfach (204) ein jeweiliges, im Wesentlichen festes (210) erstes Fachbrett (211) und ein jeweiliges, im Wesentlichen festes (214) zweites Fachbrett (215) aufweist, wobei das jeweilige zweite Fachbrett (215) über dem jeweiligen ersten Fachbrett (211) ist, und wobei die Überkopfgepäckfächer (206) im Wesentlichen zwischen zwei Gängen (247) einer Passagierkabine (203) des Luftfahrzeugs (201) angeordnet sind, wobei die Überkopfgepäckfächer (206) gemäß einem der Ansprüche 1 bis 9 sind.

11. Luftfahrzeug (201) nach Anspruch 10, wobei ein vertikaler Abstand (248) zwischen einem Kabinenboden (250) und einer Unterseite (252) der Überkopfgepäckfächer (206) mindestens 1,473 Meter (d.h. 58 Zoll) ist.

12. Luftfahrzeug (201) nach Anspruch 10 oder 11, wobei ein erstes Aufbewahrungsvolumen (217) zwischen dem jeweiligen ersten Fachbrett (211) und dem jeweiligen zweiten Fachbrett (215) dazu konfiguriert ist, eine erste Anzahl von Rollkoffern aufzunehmen, und wobei ein zweites Aufbewahrungsvolumen (218) von dem zweiten Fachbrett (215) aufwärts dazu konfiguriert ist, eine zweite Anzahl von Rollkoffern aufzunehmen.

13. Luftfahrzeug (201) nach einem der Ansprüche 10 bis 12, wobei ein Satz von jeweiligen Überkopfgepäckfächern (206) im Wesentlichen zu einer Reihe von Passagiersitzen (276) ausgerichtet ist und dazu konfiguriert ist, zumindest einen Rollkoffer pro Sitz in der Reihe von Passagiersitzen (276) aufzunehmen.

## Revendications

1. Compartiment à bagages supérieur (204) d'un aéronef (201), comprenant :
un premier volume de rangement (217) entre une première étagère (211) sensiblement rigide (210) et une deuxième étagère (215) sensiblement rigide (214), le premier volume de rangement (217) ayant une première ouverture (238) ;
un deuxième volume de rangement (218) au-dessus du premier volume de rangement (217), le deuxième volume de rangement (218) se trouvant entre la deuxième étagère (215) et un haut (220) du compartiment à bagages supérieur (204),
le deuxième volume de rangement (218) ayant une deuxième ouverture (240),
dans lequel la première ouverture (238) et la deuxième ouverture (240) sont accessibles depuis un même côté de l'aéronef (201) ;
une première porte (440, 624, ou 1012) couvrant de manière mobile la première ouverture (238) ou
au moins l'une parmi une première porte (440, 624, ou 1012) couvrant de manière mobile à la fois la première ouverture (238) et la deuxième ouverture (240) ou une première porte (440, 624, ou 1012) et une deuxième porte (626, ou 1008) couvrant de manière mobile, respectivement, la première ouverture (238) et la deuxième ouverture (240) ;
au moins une main courante (234) associée à au moins l'un parmi le premier volume de rangement (217) ou le deuxième volume de rangement (218), ladite main courante (234) servant de rebord pour empêcher des objets de tomber du premier volume de rangement (217) ou du deuxième volume de rangement (218) lorsque la porte respective est ouverte,
dans lequel ladite main courante (234) est suspendue à l'extérieur du volume de rangement (217, 218) correspondant.

2. Compartiment à bagages supérieur (204) selon la revendication 1, dans lequel le compartiment à bagages supérieur (204) est un compartiment à bagages de ligne centrale.

3. Compartiment à bagages supérieur (204) selon la revendication 2 comprenant en outre :
un troisième volume de rangement (254) avec une troisième ouverture (258) ;
et
un quatrième volume de rangement (256) avec une quatrième ouverture (260), dans lequel la troisième ouverture (258) et la quatrième ouverture (260) sont accessibles depuis un côté de l'aéronef (201) opposé au côté de l'aéronef (201) donnant accès à la première ouverture (238) et à la deuxième ouverture (240).

4. Compartiment à bagages supérieur (204) selon l'une quelconque des revendications 1 à 3, dans lequel le premier volume de rangement (217) est configuré pour accueillir un bagage à roulettes dans au moins l'une parmi une orientation longitudinale à plat, une orientation transversale sur la tranche, une orientation transversale à plat ou une orientation longitudinale sur la tranche.

5. Compartiment à bagages supérieur (204) selon l'une quelconque des revendications 1 à 4, comprenant en outre :
un système de déplacement (241) associée à au moins l'une parmi la première étagère (211) ou la deuxième étagère (215), dans lequel le système de déplacement (241) est configuré pour réduire une résistance de friction au chargement et au déchargement de bagages dans le compartiment à bagages supérieur (204).

6. Compartiment à bagages supérieur (204) selon la revendication 5, dans lequel le système de déplacement (241) comprend au moins l'un parmi un rouleau, un plateau à rouleaux, un rouleau motorisé, une roue, une surface d'étagère à faible frottement, un revêtement d'étagère à faible frottement, ou une surface d'étagère incorporant un matériau à faible frottement.

7. Compartiment à bagages supérieur (204) selon l'une quelconque des revendications 1 à 6, dans lequel au moins l'une parmi la première étagère (211) ou la deuxième étagère (215) est en pente vers le bas dans une direction vers l'extérieur par rapport à une ligne centrale (228) de l'aéronef (201).

8. Compartiment à bagages supérieur (204) selon l'une quelconque des revendications 1 à 6, dans lequel au moins l'une parmi la première étagère (211) ou la deuxième étagère (215) est en pente vers le bas dans une direction vers l'intérieur par rapport à une ligne centrale (228) de l'aéronef (201).

9. Compartiment à bagages supérieur (204) selon l'une quelconque des revendications 1 à 8, dans lequel la deuxième étagère (215) est plus longue que la première étagère (211).

10. Aéronef (201) ayant des compartiments à bagages supérieurs (206) positionnés uniquement dans une région de ligne centrale (246) de l'aéronef (201), l'aéronef (201) comprenant :
les compartiments à bagages supérieurs (206) positionnés uniquement dans la région de ligne centrale (246) de l'aéronef (201), dans lequel chaque compartiment à bagages supérieur (204) dispose d'une première étagère (211) respective sensiblement rigide (210) et d'une deuxième étagère (215) respective sensiblement rigide (214), dans lequel la deuxième étagère (215) respective est au-dessus de la première étagère (211) respective, et dans lequel les compartiments à bagages supérieurs (206) sont positionnés sensiblement entre deux couloirs (247) d'une cabine de passagers (203) de l'aéronef (201), dans lequel les compartiments à bagages supérieurs (206) sont conformes à l'une quelconque des revendications 1 à 9.

11. Aéronef (201) selon la revendication 10, dans lequel un espace de dégagement vertical (248) entre un plancher de cabine (250) et un fond (252) des compartiments à bagages supérieurs (206) est d'au moins 1,473 mètre (soit 58 pouces).

12. Aéronef (201) selon les revendications 10 ou 11, dans lequel un premier volume de rangement (217) entre la première étagère (211) respective et la deuxième étagère (215) respective est configuré pour recevoir un premier nombre de bagages à roulettes, et dans lequel un deuxième volume de rangement (218) à partir de la deuxième étagère (215) vers le haut est configuré pour recevoir un deuxième nombre de bagages à roulettes.

13. Aéronef (201) selon l'une quelconque des revendications 10 à 12, dans lequel un ensemble de compartiments à bagages supérieurs (206) respectifs sensiblement alignés avec une rangée de sièges passagers (276) est configuré pour recevoir au moins un bagage à roulettes par siège dans la rangée de sièges passagers (276).
